(19) Europäisches Patentamt
European Patent Office
Office européen des brevets

(11) **EP 2 685 209 B1**

(12) **EUROPEAN PATENT SPECIFICATION**

(45) Date of publication and mention
of the grant of the patent:
**18.09.2019  Bulletin 2019/38**

(21) Application number: **11860399.2**

(22) Date of filing: **09.03.2011**

(51) Int Cl.:
*G01B 11/26* *(2006.01)*      *G01N 21/90* *(2006.01)*
*G02B 23/22* *(2006.01)*

(86) International application number:
**PCT/JP2011/055508**

(87) International publication number:
**WO 2012/120662 (13.09.2012 Gazette 2012/37)**

(54) **GLASS BOTTLE INSPECTION DEVICE WITH TELECENTRIC LENS UNIT**

GLASFLASCHENINSPEKTIONSVORRICHTUNG MIT TELEZENTRISCHER LINSENEINHEIT

DISPOSITIF D'INSPECTION DE BOUTEILLE EN VERRE AVEC UNITÉ DE LENTILLE
TÉLÉCENTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2014  Bulletin 2014/03**

(73) Proprietor: **Toyo Glass Co., Ltd.
Tokyo 141-8640 (JP)**

(72) Inventor: **HARADA, Takashi
Kanagawa 210-0863 (JP)**

(74) Representative: **Haseltine Lake Kempner LLP
Redcliff Quay
120 Redcliff Street
Bristol BS1 6HU (GB)**

(56) References cited:
**WO-A1-03/016886          JP-A- 9 101 119
JP-A- 9 178 448           JP-A- 10 148 517
JP-A- 63 151 804          JP-A- H09 178 448
JP-A- 2000 241 363        JP-A- 2006 276 025
JP-A- 2006 276 025        JP-A- 2007 010 447
JP-A- 2007 171 149        JP-A- 2007 240 469
US-A1- 2002 009 300**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 2 685 209 B1

**Description**

Technical Field

The present invention relates to a technique for inspecting the top of a mouth portion of a glass bottle and, in particular, to an inspection device for inspecting an inclination of the top of a mouth portion of a glass bottle (top inclination) at high speed and comprising a telecentric lens unit suitable for measuring an inclination of a bottle.

Background Art

Generally, in a process for producing glass bottles, glass bottles produced by a bottle making machine are guided to a glass bottle inspection device, the glass bottles are inspected for defects at the glass bottle inspection device, and a glass bottle having a predetermined defect is eliminated as a defective. One known example of a glass bottle inspection device of this type is an inspection device for inspecting an inclination of the top of a bottle mouth (hereinafter referred to as "top inclination"). Eliminating a glass bottle having a large top inclination at the glass bottle inspection device can prevent liquid leakage of a content and a trouble occurring in capping.

Devices for inspecting a top inclination are described in, for example, Patent Literature 1 and 2 listed below. These inspection devices successively take images (still images) of the bottle mouth portion of a rotating bottle using image taking means, detect two points at the top of the bottle mouth from each of the images, calculate a difference between the two points in a vertical direction, and determine that the difference is a top inclination.

Patent Literature 3 discloses a method and device for the inspection of filled and sealed bottles.

Citation List

Patent Literature

PTL 1: Japanese Unexamined Patent Application Publication No. 2007-240468
PTL 2: Japanese Unexamined Patent Application Publication No. 2007-240469
PTL 3: PCT Publication No. WO 03/016886.

Summary of Invention

Technical Problem

When a bottle is rotated, its shock may sway and incline the bottle. If an inclination of the top of the bottle mouth is detected in such an inclined state, the top inclination is not accurately inspected. Accordingly, traditional devices for measuring a top inclination have an accuracy problem.

It is an object of the present invention to accurately inspect a top inclination even if a bottle sways and inclines when it is rotated on an inspection stand. Solution to Problem

The present invention is a glass bottle inspection device including
rotating means for rotating a glass bottle about a bottle axis,
mouth portion light emitting means for emitting light onto a bottle mouth of the glass bottle,
mouth portion image taking means for taking an image of the bottle mouth onto which the light is emitted from the mouth portion light emitting means,
base portion light emitting means for emitting light onto a base portion of the glass bottle, and
base portion image taking means for taking an image of the base portion onto which the light is emitted from the base portion light emitting means.

The base portion image taking means includes a telecentric lens unit and a camera.

The telecentric lens unit includes a central reflector, reflective plates, and a telecentric lens that are disposed in a box-shaped main body, the main body having an entrance on a front side thereof and an exit on a back side thereof.

The central reflector has a triangular pole shape and is vertically arranged such that one vertex thereof faces the back side, and regions on both left and right sides of the central reflector serve as the entrance.

Of the reflective plates, one is vertically arranged at a location spaced away from the left side of the central reflector and another one is vertically arranged at a location spaced away from the right side thereof.

The telecentric lens is fixed behind the central reflector, and a region behind the telecentric lens serves as the exit.

Light incident through the entrance is reflected by the reflective plates, then reflected by reflection planes on both sides of the vertex of the central reflector, passes through the telecentric lens, exits through the exit, and reaches the camera.

Two predetermined points G and H at a top of the bottle mouth are detected from the image of the mouth portion taken by the mouth portion image taking means.

Two predetermined points M and N in the bottle base portion are detected from the image of the base portion taken by the base portion image taking means, the image of the base portion being taken simultaneously with the image of the mouth portion.

A top inclination of the bottle being in a vertical state is calculated from the two points G and H in the mouth portion and the two points M and N in the base portion.

Detecting the two points M and N in the bottle base portion enables an inclination of the bottle to be identified. The top inclination of the bottle being in the vertical state can be obtained by subtracting the inclination of the bottle from the inclination of the top of the bottle mouth obtained from the two points G and H at the top of the bottle mouth.

One example of a specific method of calculating the top inclination of the bottle in the vertical state from the two points G and H in the mouth portion and the two points M and N in the base portion can be the one in which, when the two points G and H at the top of the bottle mouth portion have coordinates (Gx, Gy) and (Hx, Hy), respectively, and the two points M and N in the base portion have coordinates (Mx, My) and (Nx, Ny), respectively, the top inclination of the bottle being in the vertical state is calculated by the following expression:

$$\text{top inclination} = |(Gy - Hy) - (My - Ny)*(Gx - Hx)/(Mx - Nx)|.$$

(Gy - Hy) is the vertical distance between the two points G and H in the mouth portion. (My - Ny) is the vertical distance between the two points M and N in the base portion. (Gx - Hx) is the horizontal distance between the two points G and H in the mouth portion. (Mx - Nx) is the horizontal distance between the two points M and N in the base portion.

The device includes a telecentric lens unit including a central reflector, reflective plates, and a telecentric lens that are disposed in a box-shaped main body, the main body having an entrance on a front side thereof and an exit on a back side thereof.

The central reflector has a triangular pole shape and is vertically arranged such that one vertex thereof faces the back side, and regions on both left and right sides of the central reflector serve as the entrance.

Of the reflective plates, one is vertically arranged at a location spaced away from the left side of the central reflector and another one is vertically arranged at a location spaced away from the right side thereof.

The telecentric lens is fixed behind the central reflector, and a region behind the telecentric lens serves as the exit.

Light incident through the entrance is reflected by the reflective plates, then reflected by reflection planes on both sides of the vertex of the central reflector, passes through the telecentric lens, and exits through the exit.

When an image of the base portion of the bottle is taken by the use of this telecentric lens unit, light incident on the reflective plates separately disposed on left and right sides is used in taking the image. Thus when the positions of the reflective plates are adjusted so as to match with adjacent areas of the left and right ends of the bottle, only an image of adjacent areas of both left and right ends of the bottle base portion is taken, and no image of the central portion is taken. Accordingly, even if the bottle has a large body diameter, taken images can be small, and the resolution of the camera is significantly better than that when an image of the entire bottle base portion is taken. Only the image of the adjacent areas of the left and right ends of the base portion is needed to identify an inclination of the bottle, and it is not necessary to take an image of the central portion. This telecentric lens unit is significantly suited for determining the inclination of the bottle.

The reflective plates can be disposed so as to be movable in left and right direction (direction perpendicular to the direction between the front side and back side). This enables the positions of the reflective plates to match with the adjacent areas of the left and right ends of the bottle, and the present invention can be used for bottles having various base diameters.

Advantageous Effects of Invention

The glass bottle inspection device of the present invention can accurately calculate a top inclination of a bottle being in a vertical state even when the bottle being in a swaying state on an inspection stand is inspected and thus can achieve an accurate inspection.

Taking images of a bottle base portion using a telecentric lens unit of the present invention enables images of both ends of the bottle base portion to be taken with a good resolution even if the bottle has a large body diameter and thus can accurately inspect a top inclination with high accuracy.

Brief Description of Drawings

Fig. 1 is an explanatory schematic side view of a glass bottle inspection device of the present invention.
Fig. 2 is an explanatory schematic plan view of the glass bottle inspection device of the present invention.
Fig. 3 is a cross-sectional view of a telecentric lens unit.
Fig. 4 is a section view taken along the A-A line in Fig. 2.
Fig. 5 is an explanatory drawing of image processing for a bottle mouth portion.
Fig. 6 is an explanatory drawing of an image of a bottle base portion.
Fig. 7 is an explanatory drawing of image processing for the bottle base portion.
Fig. 8 is an explanatory drawing of a method of calculating a top inclination.

Description of Embodiments

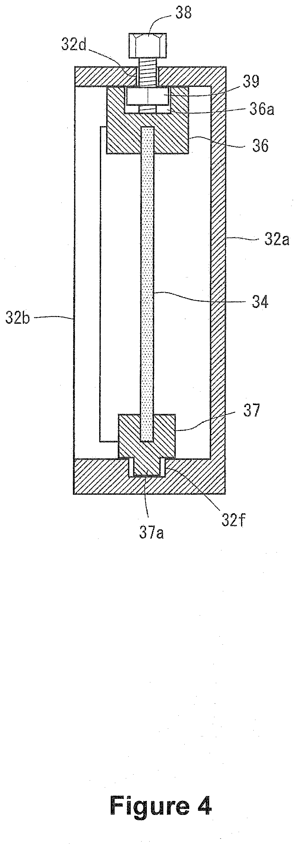

An embodiment of the present invention will be described below with reference to the drawings.

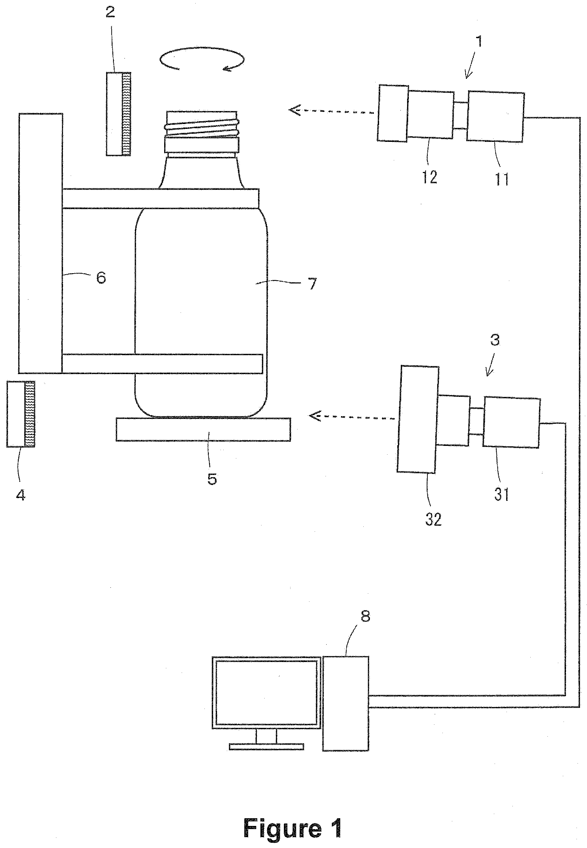

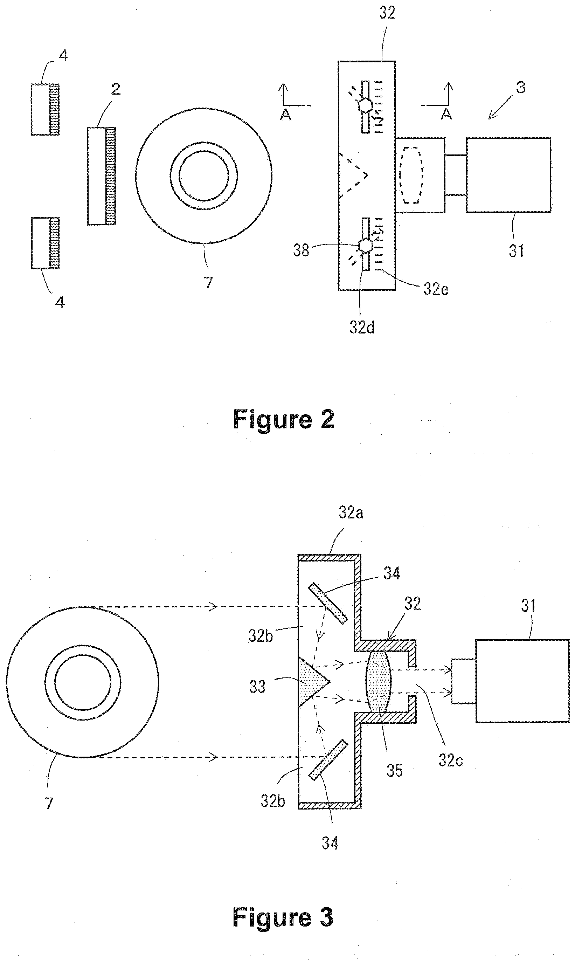

Figs. 1 and 2 illustrate a schematic configuration of a glass bottle inspection device according to the present embodiment. In these drawings, a glass bottle 7 is guided onto an inspection stand 5 by guiding means (not illustrated), rotatably held by bottle holding means 6, and rotated on the inspection stand 5 by rotating means (not illustrated) such that the bottle axis is used as the rotation axis.
Known means described in the above-mentioned Patent Literature 1 and 2 can be used as each of the guiding means for bottles and the rotating means for bottles.
Mouth portion image taking means 1 and mouth portion light emitting means 2 face each other such that a mouth portion 7a of the glass bottle 7 is disposed therebetween. Base portion image taking means 3 and base portion light emitting means 4 face each other such that a base portion 7b of the glass bottle is disposed therebetween.
One example of the mouth portion image taking means 1 can be a high-speed area sensor camera 11 to which a telecentric lens 12 with unchanged image magnification is attached. One example of each of the mouth portion light emitting means 2 and the base portion light emitting means 4 can be a diffusion surface light source in which blue light-emitting diodes (LEDs), which emit blue light, are arranged in a matrix. The mouth portion light emitting means and the base portion light emitting means may be single large light emitting means.
The base portion image taking means 3 includes a telecentric lens unit 32 and a camera 31. The telecentric lens unit 32 is the one in which a central reflector 33, two reflective plates 34, and a telecentric lens 35 are mounted in a box-shaped main body 32a. The main body 32a has an entrance 32b on its front side and an exit 32c on its back side. The central reflector 33 has the shape of a triangular pole with isosceles triangular cross section, and it is vertically arranged and fixed such that one vertex thereof faces the back side, the planes on both sides of this vertex are reflection planes, the plane opposed to this vertex faces the front side. The regions on both left and right sides of the central reflector 33 are opened as the entrance.
Of the reflective plates 34, one is vertically arranged at a location spaced away from the left side of the central reflector 33 and the other is vertically arranged at a location spaced away from the right side thereof. As illustrated in Fig. 4, the upper portion and the lower portion of the reflective plate 34 are held by a holder 36 and a holder 37, respectively. The upper holder 36 has a depression 36a in its upper surface. The depression 36a accommodates a nut 39 therein such that the nut 39 cannot be rotated. A bolt 38 inserted through a slit 32d formed in the upper surface of the unit main body 32a into the depression 36a is screwed into the nut 39. The lower holder 37 has a projection 37a on its lower surface. The projection 37a is disposed in a groove 32f formed in the bottom surface of the main body 32a such that it can slide. When the bolt 38 is loosened, the reflective plate 34 can move in the left and right direction along the slit 32d and the groove 32f. When the bolt 38 is tightened, the lower holder 37 is pressed against the bottom surface of the main body 32a, and the reflective plate 34 is fixed. The orientation of the reflective plate 34 is adjusted such that light incident through the entrance is directed to the corresponding reflection plane of the central reflector 33.
As described above, because the reflective plates 34 can move in left and right direction (direction perpendicular to the direction from which light is incident), they are positioned so as to substantially face the front sides of the left and right ends of the bottle base portion in accordance with the body diameter of the glass bottle 7.
The telecentric lens 35 is fixed behind the central reflector 33, and the region behind the telecentric lens 35 is opened as the exit 32c. The camera 31 (e.g., high-speed area sensor camera) is attached in the exit 32c. Light incident through the entrance 32b is reflected by the reflective plates 34, then reflected by the reflection planes of the central reflector 33, passes through the telecentric lens 35, exits through the exit 32c, and reaches the camera 31, as indicated with the broken lines with arrows in Fig. 3.
The optical axis of the mouth portion image taking means 1 is inclined upward by an angle α from a horizontal position and is configured to take an image of the bottle mouth portion 7a from a location slightly below it. This can prevent taking an image of an edge of the bottle mouth portion that is more remote from the image taking means.

The optical axis of the base portion image taking means 3 is inclined upward by an angle β from a horizontal position and is configured to take an image of the bottle base portion 7b from a location slightly below it. This can prevent taking an image of an edge of the bottle base portion that is more remote from the image taking means.

Each of α and β may preferably be approximately 1° to 3°.

Images (still images) taken by the image taking means 1 and 3 are transmitted to image processing means 8, a top inclination is calculated, and a pass/fail check is performed on the glass bottle. One example of the image processing means 8 can be a personal computer with a monitor. Necessary information, such as images taken by the image taking means 1 and 3 and a calculated top inclination, can be displayed on the monitor.

Images can be taken 24 times for one rotation of a glass bottle (at intervals of 15°), for example. Images of the mouth portion and the base portion can be simultaneously taken, and a top inclination can be calculated from the simultaneously taken mouth-portion image and base-portion image.

The image processing means performs image processing described below every time it captures the mouth-portion image and base-portion image simultaneously taken by the image taking means 1 and 3.

[Image Processing for Mouth Portion]

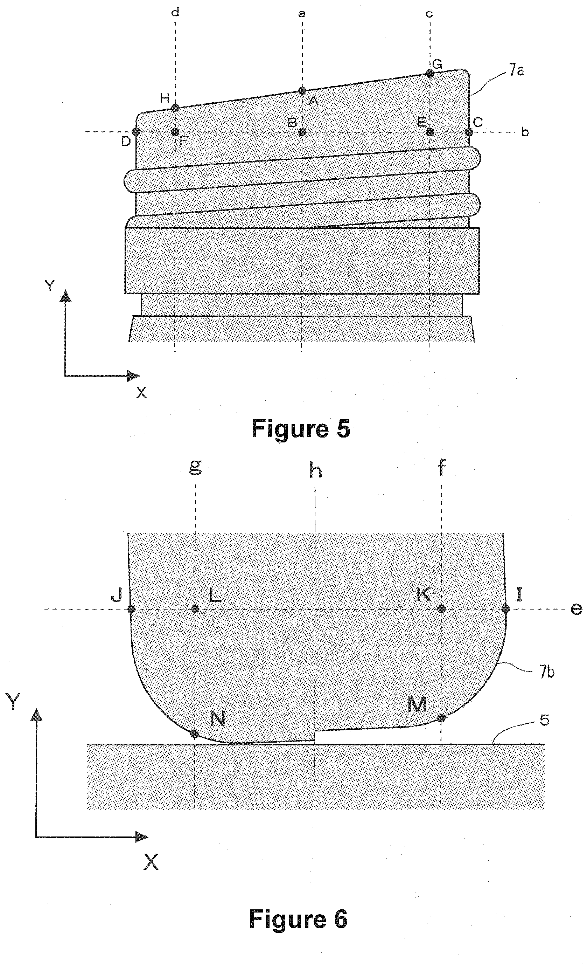

Fig. 5 schematically illustrates a mouth-portion image of the mouth portion 7a of a glass bottle taken by the mouth portion image taking means 1. The mouth portion of the glass bottle is shown as being dark, whereas the background is shown as being light. Accordingly, binarizing the image can facilitate image processing described below.

When the image processing means 8 captures a single mouth-portion image, it detects an intersection point A of a vertical line a and the bottle mouth portion 8a. The vertical line a is set at any X-coordinate position in the vicinity of the central axis of the bottle. Then the image processing means 8 determines a point B displaced from the intersection point A downward along the Y-axis by a predetermined distance (distance at which the screw is not obstruction) and determines intersection points C and D of a horizontal line b passing though the point B and both ends of the bottle mouth portion 7a.

Then the image processing means 8 determines points E and F displaced from the intersection points C and D in the inward direction of the bottle mouth portion along the X-axis by a predetermined distance and determines intersection points G and H of vertical lines c and d passing through the points E and F and the top of the mouth portion.

With this, each of the points G and H for use in measuring an inclination of the top of the bottle mouth portion can always be in the same location.

[Image Processing for Base Portion]

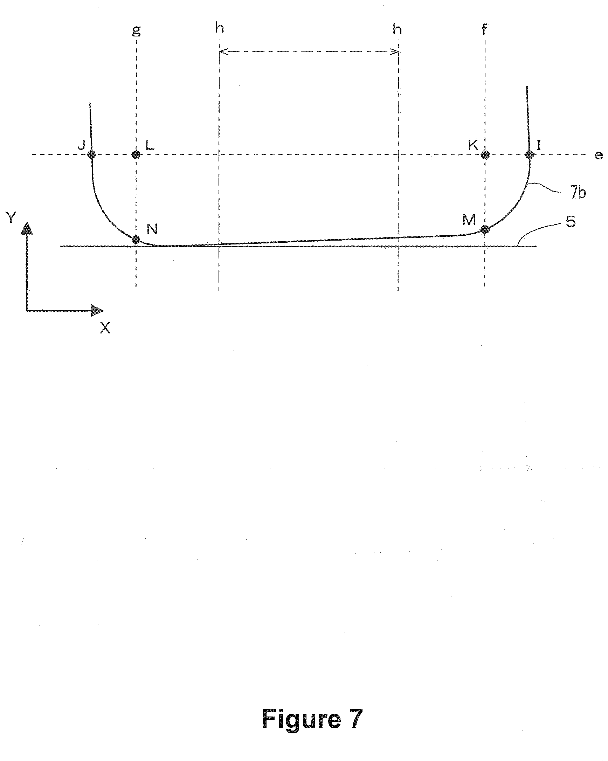

Fig. 6 schematically illustrates a base-portion image of the base portion 7b of the glass bottle taken by the base portion image taking means 3. The base portion 7b of the glass bottle and the inspection stand 5 are shown as being dark, whereas the background is shown as being light. Accordingly, binarizing the image can facilitate image processing described below. The base-portion image is the one in which the portion between two vertical lines h and h is absent from an actual base portion shape illustrated in Fig. 7. This is brought by the effect of the telecentric lens unit 32.

The image processing means 8 detects intersection points I and J of a horizontal line e and both ends of the bottle base portion 7b for a base-portion image taken simultaneously with the mouth-portion image. The horizontal line e is set at any Y-coordinate position slightly above the upper surface of the inspection stand 5.

Then the image processing means 8 determines points K and L displaced from the intersection points I and J in the inward direction of the bottle base portion along the X-axis by a predetermined distance and determines intersection points M and N of vertical lines f and g passing through the points K and L and the bottom of the base portion. If there is no light portion on the line g (if the point N is in contact with the inspection stand 5), for example, a point on the upper surface of the inspection stand is the point N. Then the image processing means 8 converts the coordinates of the points M and N into coordinates in the actual base-portion shape in which the portion between the vertical lines h and h is present illustrated in Fig. 7.

With this, each of the points M and N for use in measuring an inclination of the bottle base portion can always be in the same location.

[Calculation of Top Inclination]

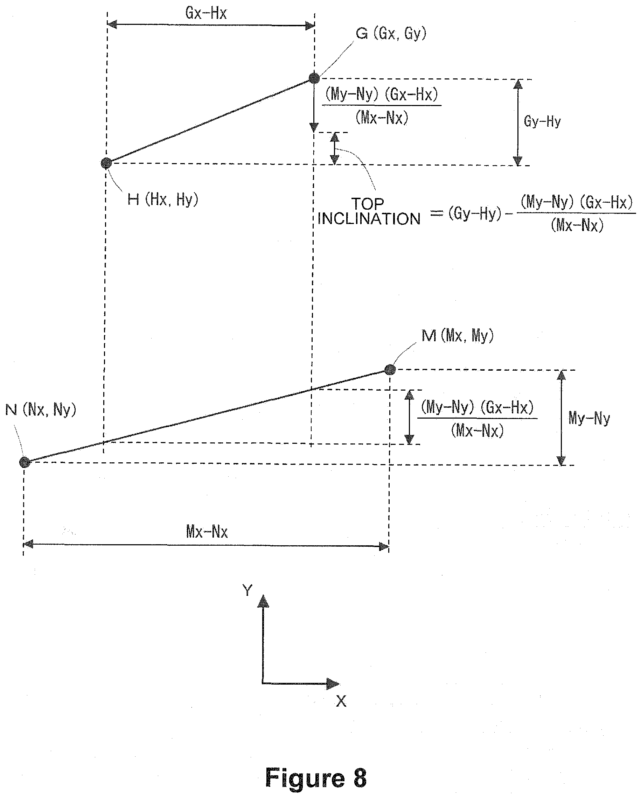

Fig. 8 is an explanatory drawing of a method of calculating a top inclination.

The line connecting the two measurement points G and H in the bottle mouth portion is inclined, and the difference therebetween in the vertical direction is (Gy - Hy). This inclination contains the top inclination and an inclination of the bottle.

The line connecting the two measurement points M and N in the bottle base portion is also inclined, and this inclination corresponds to the inclination of the bottle. The amount of a part in which the inclination of the bottle (inclination of the base portion) has an influence on the inclination of the top of the mouth portion in the vertical direction is $(My - Ny)(Gx - Hx)/(Mx - Nx)$. Thus the difference between the two points in the bottle mouth portion in the vertical direction when the bottle vertically stands (= top inclination) can be obtained by subtracting $(My - Ny)(Gx - Hx)/(Mx - Nx)$ from the difference $(Gy - Hy)$ between the two points in the bottle mouth portion in the vertical direction. This expression may have a negative result, so an absolute value of the result is used.

The unit of the top inclination determined here is the number of pixels. When it is necessary to convert that unit into millimeters, the value is multiplied by the length (mm) of one pixel.

[Pass/Fail Check]

The image processing means 8 can make a pass/fail check for a glass bottle on the basis of a calculated top inclination.

There are various methods for the pass/fail check. One example case is discussed here in which, when images of the mouth portion and the base portion are taken 24 times for one rotation of a single glass bottle (at intervals of 15°), 24 top inclinations are calculated. When the sum of the amounts of these calculated top inclinations is larger than a predetermined threshold, it can be determined that the bottle is a defective; when it is not so, it can be determined that the bottle is a non-defective.

For example, when the maximum value of 24 top inclinations calculated for a single bottle is larger than a predetermined value, it can be determined that the bottle is a defective; when it is not so, it can be determined that the bottle is a non-defective.

Reference Signs List

| | |
|---|---|
| 1 | mouth portion image taking means |
| 11 | camera |
| 12 | telecentric lens |
| 2 | mouth portion light emitting means |
| 3 | base portion image taking means |
| 31 | camera |
| 32 | telecentric lens unit |
| 32a | main body |
| 32b | entrance |
| 32c | exit |
| 32d | slit |
| 32e | scale |
| 32f | groove |
| 33 | central reflector |
| 34 | reflective plate |
| 35 | telecentric lens |
| 36 | holder |
| 36a | depression |
| 37 | holder |
| 37a | projection |
| 38 | bolt |
| 39 | nut |
| 4 | base portion light emitting means |
| 5 | inspection stand |
| 6 | bottle holding means |
| 7 | glass bottle |
| 7a | mouth portion |
| 7b | base portion |
| 8 | image processing means |

## Claims

1. A glass bottle inspection device comprising:

   rotating means for rotating a glass bottle (7) about a bottle axis;
   mouth portion light emitting means (2) for emitting light onto a bottle mouth of the glass bottle (7);
   mouth portion image taking means (1) for taking an image of the bottle mouth onto which the light is emitted from the mouth portion light emitting means (2);
   base portion light emitting means (4) for emitting light onto a base portion (7b) of the glass bottle (7); and
   base portion image taking means (3) for taking an image of the base portion (7b) onto which the light is emitted from the base portion light emitting means (4),
   wherein the base portion image taking means (3) includes a telecentric lens unit (32) and a camera (11),
   wherein the telecentric lens unit (32) comprises a central reflector (33), two reflective plates (34), and a telecentric lens (35) that are disposed in a box-shaped main body (32a), the main body (32a) having an entrance (32b) on a front side thereof and an exit (32c) on a back side thereof,
   wherein the central reflector (33) has a triangular pole shape and is vertically arranged such that one vertex thereof faces the back side of the box-shaped main body (32a), and regions on both left and right sides of the central reflector (33) serve as the entrance (32b),
   of the two reflective plates (34), one is vertically arranged at a location spaced away from the left side of the central reflector (33) and another one is vertically arranged at a location spaced away from the right side thereof,
   the telecentric lens (35) is fixed behind the central reflector (33), and a region behind the telecentric lens (35) serves as the exit (32c), and
   light incident through the entrance (32b) is reflected by the reflective plates (34), then reflected by reflection planes on both sides of the vertex of the central reflector (33), passes through the telecentric lens (35), and exits through the exit (32c) to take an image of a bottle to be inspected, wherein the positions of the two reflective plates (34) are adjusted so as to match with adjacent areas of the left and right ends of a bottle to be inspected such that only an image of adjacent areas of both left and right ends of the bottle base portion is taken, and no image of the central portion is taken; and
   wherein two predetermined points G and H at a top of the bottle mouth are detected from the image of the mouth portion (7a) taken by the mouth portion image taking means (1),
   two predetermined points M and N at the bottom of the bottle base portion (7b) are detected from the image of the base portion (7b) taken by the base portion image taking means (3), the image of the base portion (7b) being taken simultaneously with the image of the mouth portion (7a), and
   a top inclination of the bottle (7) being in a vertical state is calculated from the two points G and H in the mouth portion (7a) and the two points M and N in the base portion (7b) .

2. The glass bottle inspection device according to Claim 1, wherein, when the two points G and H at the top of the bottle mouth portion (7a) have coordinates (Gx, Gy) and (Hx, Hy), respectively, and the two points M and N at the bottom of the bottle (7) have coordinates (Mx, My) and (Nx, Ny), respectively, the top inclination of the bottle (7) being in the vertical state is calculated by the following expression:

```
top inclination = |(Gy - Hy) - (My - Ny)*(Gx - Hx)/(Mx
- Nx)|
```

3. The glass bottle inspection device according to claim 1 or 2, wherein the reflective plates (34) are movable in left and right direction.

## Patentansprüche

1. Glasflaschenprüfgerät, umfassend:

   Drehmittel zum Drehen einer Glasflasche (7) um eine Flaschenachse;
   Mundteil-Lichtemissionsmittel (2) zum Emittieren von Licht auf eine Flaschenmündung einer Glasflasche (7);
   Mundteil-Bildaufnahmemittel (1) zum Aufnehmen eines Bildes der Flaschenmündung, auf die das Licht von dem Mundteil-Lichtemissionsmittel (2) emittiert wird;

Basisteil-Lichtemissionsmittel (4) zum Emittieren von Licht auf einen Basisteil (7b) der Glasflasche (7); und Basisteil-Bildaufnahmemittel (3) zum Aufnehmen eines Bildes des Basisteils (7b), auf den das Licht von dem Basisteil-Lichtemissionsmittel (4) emittiert wird,

wobei das Basisteil-Bildaufnahmemittel (3) eine telezentrische Linseneinheit (32) und eine Kamera (11) enthält, wobei die telezentrische Linseneinheit (32) einen zentralen Reflektor (33), zwei reflektierende Platten (34) und eine telezentrische Linse (35) umfasst, die in einem kastenförmigen Hauptkörper (32a) angeordnet sind, der Hauptkörper (32a) einen Eingang (32b) an seiner Vorderseite und einen Ausgang (32c) an seiner Rückseite aufweist,

wobei der zentrale Reflektor (33) eine dreieckige Stangenform aufweist und vertikal so angeordnet ist, dass ein Scheitel davon der Rückseite des kastenförmigen Hauptkörpers (32a) zugewandt ist, und Bereiche sowohl auf der linken als auch auf der rechten Seite des zentralen Reflektors (33) als Eingang (32b) der beiden reflektierenden Platten (34) dienen, wobei eine vertikal an einer Stelle angeordnet ist, die von der linken Seite des zentralen Reflektors (33) beabstandet ist und eine andere vertikal an einer Stelle angeordnet ist, die von der rechten Seite davon beabstandet ist,

die telezentrische Linse (35) hinter dem zentralen Reflektor (33) befestigt ist, und ein Bereich hinter der telezentrischen Linse (35) als Ausgang (32c) dient, und

einfallendes Licht durch den Eingang (32b) von den reflektierenden Platten (34) reflektiert wird, dann durch Reflektionsebenen auf beiden Seiten des Scheitels des zentralen Reflektors (33) reflektiert, die telezentrische Linse (35) durchquert, und durch den Ausgang (32c) austritt, um ein Bild einer zu prüfenden Flasche aufzunehmen, wobei die Positionen der beiden reflektierenden Platten (34) so eingestellt werden, dass sie mit angrenzenden Bereichen des linken und rechten Endes einer zu prüfenden Flasche übereinstimmen, so dass nur ein Bild angrenzender Bereiche sowohl des linken als auch des rechten Endes des Flaschenbasisteils aufgenommen wird und kein Bild des Mittelteils aufgenommen wird; und

wobei zwei vorbestimmte Punkte G und H an einer Oberseite des Mundteils vom Bild des Mundteils (7a) detektiert werden, durchgeführt von dem Munteil-Bildaufnahmemittel (1),

zwei vorbestimmte Punkte M und N am Boden des Bodenteils (7b) vom Bild des Bodenteils (7b) detektiert werden, durchgeführt von dem Basisteil-Bildaufnahmemittel (3), das Bild des Bodenteils (7b) gleichzeitig mit dem Bild des Mundteils (7a) aufgenommen, und

aus den beiden Punkten G und H in dem Mundteil (7a) und den beiden Punkten M und N in dem Bodenteil (7b) eine obere Neigung der Flasche (7) in einem vertikalen Zustand berechnet wird.

2. Das Glasflaschenprüfgerät gemäß Anspruch 1, wobei, wenn die zwei Punkte G und H an der Oberseite des Flaschenteilbereichs (7a) die Koordinaten (Gx, Gy) beziehungsweise (Hx, Hy) aufweisen, und die zwei Punkte M und N auf dem Boden der Flasche (7) die Koordinaten (Mx, My) beziehungsweise (Nx, Ny) aufweisen, die obere Neigung der Flasche im vertikalen Zustand anhand folgender Formel berechnet wird:

$$\text{Obere Neigung} = (Gy - Hy) - (My - Ny) * (Gx - Hx) / (Mx - Nx)$$

3. Das Glasflaschenprüfgerät gemäß Anspruch 1 oder 2, wobei die reflektierenden Platten (34) nach links und rechts beweglich sind.

## Revendications

1. Un dispositif d'inspection de bouteille en verre comprenant :

un moyen de rotation pour faire tourner une bouteille en verre (7) autour d'un axe de bouteille ;
un moyen d'émission de lumière de la partie de goulot (2) pour émettre de la lumière sur le goulot d'une bouteille de la bouteille en verre (7) ;
un moyen de prise d'image de la partie de goulot (1) pour prendre une image du goulot de la bouteille sur laquelle la lumière est émise à partir du moyen d'émission de lumière de la partie de goulot (2) ;
un moyen d'émission de lumière de la partie de base (4) pour émettre de la lumière sur une partie de base (7b) de la bouteille en verre (7) ; et
un moyen de prise d'image de la partie de base (3) pour prendre une image de la partie de base (7b) sur laquelle la lumière est émise à partir du moyen d'émission de lumière de la partie de base (4),
dans lequel le moyen de prise d'image de la partie de base (3) comprend une unité de lentille télécentrique (32) et un appareil photo (11),

dans lequel l'unité de lentille télécentrique (32) comprend un réflecteur central (33), deux plaques réfléchissantes (34) et une lentille télécentrique (35) qui sont disposées dans un corps principal en forme de boîte (32a), le corps principal (32a) ayant une entrée (32b) sur un côté avant de celui-ci et une sortie (32c) sur un côté arrière de celui-ci,

dans lequel le réflecteur central (33) a une forme de pôle triangulaire et est disposé verticalement de telle sorte qu'un sommet de celui-ci fait face au côté arrière du corps principal en forme de boîte (32a), et les régions sur les deux côtés gauche et droit du réflecteur central (33) servent d'entrée (32b),

des deux plaques réfléchissantes (34), l'une est disposée verticalement à un emplacement espacé du côté gauche du réflecteur central (33) et une autre est disposée verticalement à un emplacement espacé du côté droit de celui-ci, la lentille télécentrique (35) est fixée derrière le réflecteur central (33), et une région derrière la lentille télécentrique (35) sert de sortie (32c), et

la lumière incidente à travers l'entrée (32b) est réfléchie par les plaques réfléchissantes (34), puis réfléchie par les plans de réflexion sur les deux côtés du sommet du réflecteur central (33), traverse la lentille télécentrique (35), et sort à travers la sortie (32c) pour prendre une image d'une bouteille à inspecter, dans lequel les positions des deux plaques réfléchissantes (34) sont ajustées de manière à correspondre aux zones adjacentes des extrémités gauche et droite d'une bouteille à inspecter de telle sorte que seule une image des zones adjacentes des deux extrémités gauche et droite de la partie de base de la bouteille est prise, et aucune image de la partie centrale n'est prise ; et

dans lequel deux points prédéterminés G et H au sommet du goulot de la bouteille sont détectés à partir de l'image de la partie de goulot (7a) prise par le moyen de prise d'image de la partie de goulot (1),

deux points prédéterminés M et N au bas de la partie de base de la bouteille (7b) sont détectés à partir de l'image de la partie de base (7b) prise par le moyen de prise d'image de la partie de base (3), l'image de la partie de base (7b) étant prise simultanément avec l'image de la partie de goulot (7a), et

une inclinaison du sommet de la bouteille (7) étant dans un état vertical est calculée à partir des deux points G et H dans la partie de goulot (7a) et les deux points M et N dans la partie de base (7b).

2. Le dispositif d'inspection de bouteille en verre selon la revendication 1, dans lequel, lorsque les deux points G et H au sommet de la partie de goulot de la bouteille (7a) ont des coordonnées (Gx, Gy) et (Hx, Hy), respectivement, et les deux points M et N au bas de la bouteille (7) ont des coordonnées (Mx, My) et (Nx, Ny), respectivement, l'inclinaison du sommet de la bouteille (7) étant dans l'état vertical est calculée par l'expression suivante :

$$\text{inclinaison du sommet} = |\,(Gy - Hy) - (My - Ny) * (Gx - Hx) / (Mx - Nx)\,|$$

3. Le dispositif d'inspection de bouteille en verre selon la revendication 1 ou 2, dans lequel les plaques réfléchissantes (34) sont mobiles dans la direction gauche et droite.

**Figure 1**

**Figure 2**

**Figure 3**

**Figure 4**

Figure 5

Figure 6

**Figure 7**

**Figure 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007240468 A
- JP 2007240469 A
- WO 03016886 A